# EUROPÄISCHE PATENTANMELDUNG

(11) **EP 4 670 513 A1**
(43) Veröffentlichungstag der Anmeldung: **31.12.2025**
(21) Anmeldenummer: 25158774.7
(22) Anmeldetag: 19.02.2025
(51) Int. Cl.: A23L 27/27, C12C 1/067, C12C 5/02, C12G 3/07

(54) **VERFAHREN ZUR AUSWAHL UND ZUR KONTROLLIERTEN PYROLYSE VON LIGNIN UND DESSEN VERWENDUNG BEI DER WHISKYHERSTELLUNG**

(30) Priorität: 30.01.2025 CH 812025; 31.05.2024 CH 5812024
(71) Anmelder: DDS Patente + Lizenzen AG, 6370 Stans (CH)
(72) Erfinder: Dr. STOCKHAUSEN, Dolf, 6052 Hergiswil (CH); Dr. WACHSEN, Olaf Werner Gerhard, 84518 Garching an der Alz (DE); SALFINGER, Reto Arthur, 3376 Graben (BE) (CH)
(74) Vertreter: Proi World Intellectual Property GmbH

(57) **Zusammenfassung**

Die Erfindung betrifft ein Verfahren zur Auswahl und zur kontrollierten Pyrolyse von Lignin und dessen Verwendung bei der Whiskyherstellung. Insbesondere betrifft die Erfindung ein Verfahren zur Auswahl eines isolierten reinen Lignins nach dessen pflanzlichen Ursprung sowie nach dessen chemisch-physikalischen Aufschluss- oder Vor- und Nachbehandlungsverfahren und zur anschließenden kontrollierten Pyrolyse mittels kontrollierbaren Parametern umfassend: die Ligninzusammensetzung, die Restfeuchtigkeit, die Darreichungsform, die Heizrate, die Reaktionstemperatur und damit die Pyrolysegeschwindigkeit, der Sauerstoffgehalt, die Feuchtigkeit bei der Pyrolyse insgesamt, der Druck, die Verweilzeit, die optionale Verwendung von Katalysatoren oder/und Bindemittel; wobei die Parameter bei der kontrollierten Pyrolyse so gewählt und kontrolliert werden, dass sich das Lignin kontrolliert thermisch zersetzt und verdampft und eine gewünschte Menge an Rauch mit flüchtigen Aromakomponenten entsteht, die sich für das Räuchern unterschiedlicher Komponenten bei der Whiskyherstellung eignet, insbesondere dadurch eignet, dass in einem ersten oder einem weiteren Destillat oder in einem trinkreifen Single Malt oder trinkreifen Whisky ein Raucharoma ohne störende Aromakomponenten oder anderen störende Nebenkomponenten, zumindest sensorisch, wahrnehmbar ist.

## Beschreibung

### Gebiet der Erfindung

Die Erfindung betrifft ein Verfahren zur Auswahl und zur kontrollierten Pyrolyse von Lignin und dessen Verwendung bei der Whiskyherstellung. Insbesondere betrifft die Erfindung ein Verfahren zur Auswahl eines isolierten reinen Lignins für eine kontrollierte Pyrolyse und dessen anschließende Verwendung zum Räuchern von unterschiedlichen Komponenten bei der Whiskyherstellung.

### Hintergrund der Erfindung

Die traditionelle Herstellung von Rauchbier und rauchigen Whiskys ist seit Jahrhunderten eng mit der Verwendung von Torf verbunden. Insbesondere für die Herstellung des Rauchmalzes, der Ausgangsstoff von Rauchbier und rauchigem Whisky.

Zur Herstellung eines Rauchmalzes wird gekeimtes Getreide (Grünmalz) mit Rauch getrocknet. Hierfür wird traditionell ein Holz- oder Torffeuer unter der Darre erwärmt und die Trocknungsluft wird samt den bei der Verbrennung entstehenden thermischen Spaltprodukten aus dem Holz oder Torf über die keimende Gerste (Grünmalz) geleitet. Dies verleiht dem Malz das typische Raucharoma. Die Bestandteile des Torfrauches werden beim Darren an der Oberfläche der Malzkörner adsorbiert und diffundieren zum Teil in diese hinein.

Das Rauchmalz wird anschließend als Maische angesetzt und danach erfolgt der Fermentation zum Whiskybier. Das Whiskybier wird anschließend zweistufig gebrannt (destilliert) und der New Make anschließend in Holz gelagert.

Es ist anzunehmen, dass Torf zunächst als billiger und reichlich vorhandener Brennstoff zur Wärmeerzeugung eingesetzt wurde, bevor mit dem Torf eine neue rauchige Geschmacksrichtung für Whisky entstand.

Die charakteristischen Aromen eines rauchigen Whiskys werden durch phenolische Komponenten aus der Torfverbrennung erhalten. Diese Komponenten entstehen durch die Pyrolyse des Lignins im Torf. Nur ein geringer Teil der Phenolöle aus dem Torf gehen aus dem Rauchmalz in das Whisky-New Make über. Dennoch ist ein gewisser Anteil wichtig und wird je nach Herkunft des Torfes und der Note der Whisky-Marke in der herkömmlichen Destillation gesteuert über sogenannte Cuts.

Vom Grünmalz bis zum trinkreifen Whisky müssen die Phenole aus dem Torf eine Reihe von Prozeduren über sich ergehen lassen. Infolgedessen nimmt der Phenolgehalt zum Teil deutlich ab und kann in der Flasche sogar nur noch etwa ein Drittel oder noch geringer von dem Ursprungswert betragen, der an rauchigen und torfigen Aromaträgern noch unmittelbar nach dem Darren im Grünmalz vorlag.

Für die Whiskyherstellung muss jährlich eine große Menge an Torf abgebaut werden. Diese abhängige und permanente Verwendung von großen Mengen an Torf rückt zunehmend in den Fokus der Whiskyhersteller und wird inzwischen kontrovers diskutiert. Torfmoore sind ein wichtiger Bestandteil des lokalen Wasserkreislaufs. Sie saugen das Wasser auf, filtern es und geben es langsam wieder ab.

Ferner ist auch bekannt, dass besonders küstennaher Torf durch die salzhaltige Luft einen hohen Anteil an Chloriden enthält. Die Verbrennung von organischen Molekülen in Gegenwart von Chloriden kann zur Dioxanbildung führt. Dieses auch als Seveso-Gift bekannte und hochtoxische Molekül wird vermehrt in Gegenden detektiert, in denen salzhaltiger Torf gestochen und verbrannt wird.

Die Brennereien in Schottland haben sich inzwischen dazu entschlossen, den Einsatz von Torf zu reduzieren. Alternativen zur Erzeugung von rauchigem Whisky ohne die Verwendung von Torf werden dringend benötigt.

Die DE885084C offenbart die Bereitung von Edelbranntwein (Whisky) mit Rauchgeschmack. Hierfür wird ein Raucharoma aus Sägemehl (Holz) in einem Schwelofen hergestellt. Anschließend wird einem freien Sprit Bestandteile konzentrierten Rauches in Rauchform zugeführt, sodass Rauchgeschmack entsteht. Insbesondere wird der Rauch nach Reinigung durch den Sprit geleitet, so dass die alkohollöslichen Rauchbestandteile herausgelöst werden.

Die WO2021168595A1 offenbart ein Verfahren zum Räuchern von alkoholischen Getränken basierend auf Wein. Hierfür wird ein Rauch erzeugt der auf der Verbrennung von edlen Hölzern beruht, wie zum Beispiel, Apfel, Eiche und Kirsche. Dieser Rauch wird in ein Behältnis mit einem fermentierten Destillat geleitet. Das einbringen des Rauches wird so lange wiederholt bis ein zufriedenstellendes Ergebnis erzielt wird.

Generell basieren alle bisherigen Verfahren zum Räuchern von alkoholischen Getränken aus dem Stand der Technik auf einer Raucherzeugung durch das Verbrennen von Torf oder Holz. Bei der Verwendung von Holz handelt es sich meist um Sägemehl oder Holzchips.

Die Verwendung von Holz führt aber, unter anderem, a) zu Schwankungen bei der Aromaintensität des Räucherns, b) zur möglichen Notwendigkeit, das Räuchern mehrfach zu wiederholen, c) zu sensorisch störende Aromakomponenten und sensorisch störende Nebenkomponenten, d) zu langen Lagerzeiten, um störendes Aroma abzubauen, e) zu hohen Lagerkosten, f) zu hohen Transportkosten, g) zu einem erhöhten Risiko, gesundheitsschädliche Substanzen unkontrolliert beim Räuchern zu erzeugen, h) zu einem hohen Energieverbrauch, i) zu hohen Kosten des Räucherns mit aufwendigen Anlagen, j) zu einer insgesamt ungünstigen Umweltbilanz.

Es ist somit Aufgabe der vorliegenden Erfindung die genannten Nachteile aus dem Stand der Technik zu überwinden. Des Weiteren ist es Aufgabe der vorliegenden Erfindung ein effizientes, ökonomisches und nachhaltiges Verfahren zur kontrollierten Erzeugung von Rauch zum Räuchern von unterschiedlichen Komponenten für die Herstellung von rauchigen Whiskys oder rauchigen Single Malts bereitzustellen, bei dem zudem auf die Verwendung von Torf verzichtet werden kann.

Diese Aufgabe wird durch die Lehre des unabhängigen Anspruchs gelöst. Weitergehende vorteilhafte Ausgestaltungen der Erfindungen sind Gegenstand der Unteransprüche.

### Begriffserklärungen

Im Folgenden werden einige Begriffe erläutert, die für die Beschreibung der Erfindung verwendet werden.

Mit dem Begriff "isoliertes reines Lignin" sind im Sinne der Erfindung, Lignine gemeint, die in isolierter oder extrahierter Form, als reine Lignine, in Form von Pulver, Granulat etc. kommerziell zu kaufen sind und eine nach gängigem Verständnis hohe Reinheit und je nach Produkt auch eine hohe Homogenität aufweisen, selbst wenn sie ursprünglich, als Abfall in Prozessen anfallen. Weniger reine Lignine sind, nach gängigem Verständnis, die zahlreichen Lignine, die u.a. als Reststoffe und Abfalllignine in der Industrie anfallen und Verunreinigungen enthalten können, die es ebenfalls kommerziell zu kaufen gibt. Ein Großteil des Lignis entsteht in Lignocellulose-Raffinerien und Zellstoffwerken, wo verholzte Biomasse in Cellulose, Hemicellulose und Lignin getrennt werden. Dieses Lignin enthält oft Schwefelverbindungen und gilt, als weniger rein. Besonders reines hochwertiges Lignin wird in speziellen Verfahren, wie, zum Beispiel, das Organosolv-Verfahren, gewonnen. Hierbei wird ein organisches Lösungsmittel verwendet, um Lignin zu lösen. Inzwischen gibt es viele neue Forschungsansätze und Verfahren, um reines oder sogar hochreines Lignin für neue Verwendungsmöglichkeiten zur Verfügung zu stellen. Somit sind mit dem Begriff "isoliertes reines Lignin" im Sinne der Erfindung, alle Lignine gemeint, die nach gängigem Verständnis eine hohe Reinheit aufweisen und die mittels unterschiedlicher Aufschluss- oder Isolations- oder Vor- und Nachbehandlungsverfahren isoliert werden und kommerziell erhältlich sind. "Lignin-Mischungen" im Sinne der Erfindung bestehen ausschließlich aus solchen isolierten reinen Ligninen.

Mit dem Begriff "pflanzlichen Ursprung" oder "gleichen pflanzlichen Ursprung" sind im Sinne der Erfindung und nach gängigem Verständnis zum einen sortenreine Rohstoffe aber auch typische nicht-sortenreine Rohstoffgruppen gemeint, wie sie üblicherweise im Handel zu kaufen sind. Lignine mit "gleichem pflanzlichen Ursprung" im Sinne der Erfindung sind zum Beispiel, Lignine aus Mais, aus Bambus, aus Reis, aber auch, zum Beispiel, Lignine aus Nadelholz, aus Weichholz, aus Hartholz, aus Getreide, aus Gräsern, etc.

Mit dem Begriff "chemisch-physikalischen Aufschluss- oder Vor- und Nachbehandlungsverfahren" sind im Sinne der Erfindung und nach gängigem Verständnis alle Aufschluss- oder Isolations- oder Vor- und Nachbehandlungsverfahren gemeint, die üblicherweise zur Herstellung von reinem Lignin angewandt werden und somit Lignine betrifft, die im Handel üblicherweise angeboten werden. Native Lignine erfahren eine erhebliche chemische Umwandlung infolge von chemisch-physikalischen Aufschluss- oder Vor- und Nachbehandlungsverfahren. Das Ausmaß der Strukturänderung ist abhängig vom Schweregrad der Verfahrensbedingungen (zum Beispiel Temperatur, Kochdauer und Konzentration der Aufschlusslösung etc).

Mit dem Begriff "kontrollierte Pyrolyse" sind im Sinne der Erfindung und nach gängigem Verständnis verschiedene thermo-chemische Umwandlungsprozesse und thermo-chemische Zersetzungen gemeint, in denen organische Verbindungen bei hohen Temperaturen (beispielsweise, mittels eines Ofens oder einer Flamme) aufgespalten, zersetzt und umgewandelt werden können. Insbesondere sind kontrollierte Pyrolyseverfahren gemeint, die mittels zahlreicher unterschiedlicher Parameter kontrollierbar und einstellbar sind. Zu diesen kontrollierbaren Parametern gehören üblicherweise und beispielsweise: die Ligninzusammensetzung, die Restfeuchtigkeit des Lignins, die Darreichungsform, die Heizrate, die Reaktionstemperatur und damit die Pyrolysegeschwindigkeit, der Sauerstoffgehalt, die Feuchtigkeit bei der Pyrolyse insgesamt, der Druck, die Verweilzeit, die optionale Verwendung von Katalysatoren oder/und Bindemittel. Die Auswahl der unterschiedlichen Parameter haben einen großen Einfluss auf die Bildung von Zersetzungsprodukte, von Aromamolekülen, von Aromaspektren und die Bildung von Schadstoffen bei der Pyrolyse von isoliertem reinen Lignin.

Mit dem Begriff " trinkreif" sind im Sinne der Erfindung und nach gängigem Verständnis Spirituosen gemeint, die genussreif sind und einen üblichen, typischen oder optimalen Geschmack entfaltet haben, insbesondere für ein breite Verbrauchergruppe und zudem, gemäß regulatorischen Anforderungen, bezüglich Reinheit, zumindest hinreichend rein sind.

Mit dem Begriff " Räuchern" ist im Sinne der Erfindung und nach gängigem Verständnis ein Verfahren gemeint, das angewandt wird, um einen Gegenstand oder einer Flüssigkeit einem bestimmten Rauch auszusetzen zum Zwecke der rauchigen Aromatisierung, sowie auch der Farbgebung und Konservierung. Je nach Beschaffenheit und Konsistenz des Gegenstandes kann im Sinne der Erfindung und nach gängigem Verständnis ein Rauch oberflächlich an ein Objekt adsorbieren werden (Getreide, Malz, Holzpartikel, Behältnis) oder auch direkt in eine Flüssigkeit eingeleitet werden.

Mit dem Begriff " Rauch" sind im Sinne der Erfindung und nach gängigem Verständnis ein Gemisch aus einer festen Phase in einer gasförmigen Phase gemeint. Ein durch Hitze oder Verbrennung entstehendes Aerosol aus Partikeln in feinstverteilter, oft kolloidaler, Form (Ruß, Asche, Unverbranntes) und aus Gasen sowie Flüssigkeitströpfchen (Wasser, Öldämpfe, Säuredämpfe, flüssige Verbrennungsrückstände).

Mit dem Begriff " Raucharoma" sind im Sinne der Erfindung und nach gängigem Verständnis Aromen gemeint, die in der Regel und üblicherweise "typisch" sind, als "typisch assoziiert" werden, bei Lebensmitteln und bei alkoholischen Getränken, die Rauch zum Räuchern ausgesetzt waren.

Mit dem Begriff "rauchig" sind im Sinne der Erfindung und nach gängigem Verständnis, Lebensmittel und alkoholische Getränke gemeint, die Rauch zum Räuchern ausgesetzt waren, was sich anschließend sensorisch wahrnehmen lässt, aufgrund von Aromen, die in der Regel und üblicherweise als typisch "rauchig" assoziiert werden.

Mit dem Begriff "störende Nebenkomponenten und störenden Aromakomponenten" sind im Sinne der Erfindung und nach gängigem Verständnis Komponenten gemeint, die typischerweise und üblicherweise als sensorisch unangenehm empfunden werden und somit nicht zur Trinkreife eines Destillats beitragen.

Mit dem Begriff "flüchtigen Aromakomponenten" sind im Sinne der Erfindung und nach gängigem Verständnis Aromakomponenten gemeint, die bei höheren Temperaturen (Pyrolyse) durch Verdampfen in die Gasphase übergehen, also flüchtig sind.

Mit dem Begriff " ersten Destillat" ist im Sinne der Erfindung und nach gängigem Verständnis das Produkt einer ersten alkoholischen Destillation gemeint.

Mit dem Begriff "weitere Destillate" ist im Sinne der Erfindung und nach gängigem Verständnis das mindestens zweite Produkt einer mehrstufigen alkoholischen Destillation gemeint.

Mit dem Begriff "gesundheitsschädlichen Substanzen" sind im Sinne der Erfindung und nach gängigem Verständnis Substanzen gemeint, die nach gängigen Regeln und Lehren als ungesund, gesundheitsgefährdend, gesundheitsschädigend, gesundheitsschädlich, giftig, oder toxisch angesehen werden

Mit dem Begriff "Ofen" sind im Sinne der Erfindung und nach gängigem Verständnis jedwedige Arten von Öfen gemeint, die eine kontrollierte Erzeugung von Wärme und Rauch ermöglichen. Insbesondere auch Räucheröfen. Im Sinne der Erfindung sind auch Räucherschränke möglich.

### Zusammenfassung der Erfindung

Überraschenderweise wurde gefunden, dass sich die genannten Nachteile aus dem Stand der Technik mit dem erfindungsgemäßen Verfahren zur Auswahl und zur kontrollierten Pyrolyse von Lignin und dessen Verwendung bei der Whiskyherstellung vorteilhaft überwinden lassen.

Es ist überraschenderweise gelungen, ein Verfahren bereitzustellen, mit dem man durch eine mehrstufige, erfinderische Auswahl von isoliertem reinem Lignin und dessen anschließender kontrollierter Pyrolyse einen Rauch erzeugen kann, der sich überraschend und vorteilhaft zum Räuchern von ganz unterschiedlichen Komponenten bei der Herstellung von Whisky und Single Malt eignet und mit dem effizient trinkreife, rauchige Single Malts und trinkreife, rauchige Whiskys hergestellt werden können.

Insbesondere kann mit dem erfinderischen Verfahren effizient, ökonomisch und nachhaltig Rauch erzeugt werden, zum Räuchern von ganz unterschiedlichen Komponenten für die Whiskyherstellung, ohne die übliche Verwendung von Torf.

Es gibt eine Vielzahl von Möglichkeiten das erfindungsgemäße Verfahren, auszugestalten und weiterzubilden. Hierzu sei einerseits verwiesen auf die dem unabhängigen Patentanspruch nachgeordneten Patentansprüche, andererseits auf die Beschreibung und den Ausführungsbeispielen.

Obwohl die Erfindung in Verbindung mit Ausführungsbeispielen beschrieben wird, soll dennoch verstanden werden, dass die vorliegende Beschreibung die Erfindung in keiner Weise auf diese angegebenen Ausführungsbeispiele einschränken soll. Vielmehr soll die Erfindung nicht nur die Ausführungsbeispiele, sondern auch verschiedene Alternativen, Modifikationen, Äquivalente und weitere Ausführungsbeispiele abdecken, die im Geiste und Umfang der Erfindung, wie sie durch die beigefügten Ansprüche definiert ist, enthalten sein können.

Die Aufgabe der vorliegenden Erfindung wird gemäß einer ersten Lehre mit einem erfindungsgemäßen Verfahren zur Auswahl und kontrollierter Pyrolyse von Lignin und dessen Verwendung bei der Whiskyherstellung gelöst, das mindestens folgende Schritte umfasst:
a) Auswahl eines isolierten reinen Lignins nach dessen pflanzlichen Ursprung, wobei auch mehrere isolierte reine Lignine mit gleichem pflanzlichem Ursprung für die Auswahl kombiniert werden können; wobei die Auswahl so gewählt wird, dass bei der anschließenden Pyrolyse des Lignins ein Rauch entsteht, der sich für das erfindungsgemäße Räuchern von unterschiedlichen Komponenten bei der Single Malt - oder Whiskyherstellung eignet, insbesondere dadurch eignet, dass bei der Whiskyherstellung in einem ersten oder einem weiteren Destillat oder in einem trinkreifen Whisky oder Single Malt ein Raucharoma ohne störende Aromakomponenten oder andere störende Nebenkomponenten, zumindest sensorisch, wahrnehmbar ist;
b) weitere Auswahl des Lignins aus a) nach dessen chemisch-physikalischen Aufschluss- oder Vor- und Nachbehandlungsverfahren, wobei auch mehrere isolierte reine Lignine mit gleichem Aufschluss- Isolations- oder Vor- und Nachbehandlungsverfahren für die Auswahl kombiniert werden können;
   wobei die Auswahl so gewählt wird, dass bei der anschließenden Pyrolyse des Lignins ein Rauch entsteht, der sich für das erfindungsgemäße Räuchern von unterschiedlichen Komponenten bei der Single Malt - oder Whiskyherstellung eignet, insbesondere dadurch eignet, dass bei der Whiskyherstellung in einem ersten oder einem weiteren Destillat oder in einem trinkreifen Whisky oder Single Malt ein Raucharoma ohne störenden Aromakomponenten oder anderen störenden Nebenkomponenten, zumindest sensorisch, wahrnehmbar ist;
c) Auswahl einer Menge des Lignins aus b) für die kontrollierte Pyrolyse, wobei die Auswahl der Menge so gewählt wird, dass bei der kontrollierten Pyrolyse des Lignins eine Menge an Rauch mit Aromakomponenten entsteht, die sich für das erfindungsgemäße Räuchern von unterschiedlichen Komponenten bei der Single Malt- oder Whiskyherstellung eignet, insbesondere dadurch eignet, dass bei der Single Malt- oder Whiskyherstellung in einem ersten oder einem weiteren Destillat oder in einem trinkreifen Whisky oder einem trinkreifen Single Malt ein Raucharoma ohne störenden Aromakomponenten oder anderen störenden Nebenkomponenten, zumindest sensorisch, wahrnehmbar ist;
d) Kontrollierte Pyrolyse des Lignins aus c) in mindestens einer Vorrichtung zur Erzeugung von Rauch, wobei die kontrollierbaren Parameter bei der kontrollierten Pyrolyse zumindest folgende Parameter umfassen: die Ligninzusammensetzung, die Restfeuchtigkeit des Lignins, die Darreichungsform des Lignins, die Heizrate, die Reaktionstemperatur und damit die Pyrolysegeschwindigkeit, der Sauerstoffgehalt, die Feuchtigkeit bei der Pyrolyse insgesamt, der Druck, die Verweilzeit, die optionale Verwendung von Katalysatoren oder/und Bindemittel; wobei die Parameter bei der kontrollierten Pyrolyse so gewählt und kontrolliert werden, dass sich das Lignin oder die Lignin-Mischung kontrolliert thermisch zersetzt und verdampft und eine gewünschte Menge an Rauch mit flüchtigen Aromakomponenten entsteht, die sich für das erfindungsgemäße Räuchern unterschiedlicher Komponenten bei die Whiskyherstellung eignet, insbesondere dadurch eignet, dass bei der Whiskyherstellung in einem ersten oder einem weiteren Destillat oder in einem trinkreifen Single Malt oder trinkreifen Whisky ein Raucharoma ohne störende Aromakomponenten oder anderen störende Nebenkomponenten, zumindest sensorisch, wahrnehmbar ist; wobei die Parameter bei der kontrollierten Pyrolyse optional so gewählt und kontrolliert werden können, dass sich das Lignin kontrolliert thermisch zersetzt und ein Rauch mit flüchtigen Aromakomponenten entsteht, der mindestens eine bestimmte Aromakomponente, wie, zum Beispiel, Vanille, in ausreichender Menge aufweist, so dass der Rauch sich eignet für das erfindungsgemäße Räuchern unterschiedlicher Komponenten bei die Whiskyherstellung, insbesondere dadurch eignet, dass in einem ersten oder einem weiteren Destillat oder in einem trinkreifen Single Malt oder trinkreifen Whisky die mindestens eine bestimmte Aromakomponente, wie, zum Beispiel, Vanille, zumindest sensorisch, wahrnehmbar ist;
e) Ausleitung des Rauches aus der mindestens einer Vorrichtung mittels mindestens einem Hilfsmittel;
f) Verwendung des Rauches mit seinen Aromabestandteilen zum Räuchern von mindestens einer der folgenden unterschiedlichen Komponenten bei der Whiskyherstellung: 1. Getreide oder/und 2. Malz oder/und 3. Holzpartikel oder/und 4. Maische vor dem Fermentieren oder/und 5. Whiskybier nach dem Fermentieren oder/und 6. einem ersten Destillat oder/und 7. einem zweiten oder weiteren Destillat oder/und 8. einem Single Malt oder/und 9. einem Whisky oder/und 10. mindestens einem Behältnis, sowie 11. fakultativ zusätzlich Wasser, als Hilfsmittel;wobei das mindestens eine Behältnis im Inneren, an der Kontaktfläche zum Inhalt, mindestens teilweise oder auch vorwiegend aus Holz sein sollte oder aber im Inneren oder aber im Ganzen ausschließlich aus Holz sein kann; wobei das mindestens eine Behältnis verschließbar sein sollte.

Gemäß einer Ausgestaltung kann das Lignin oder die Lignin-Mischung auch ein hochreines Lignin sein oder aufweisen; wobei das Lignin mindestens eine der folgenden Darreichungsformen haben kann oder auch Mischungen daraus: ein vermahlenes Pulver, ein Granulat oder auch kompaktierte Formen, wie zum Beispiel, ein Pellet oder ein Brikett oder ähnliches; wobei das mindestens eine Behältnis ein Holzfass sein kann.

Gemäß einer anderen Ausgestaltung kann der Restfeuchtigkeitsgehalt des Lignins oder der Lignin-Mischung einen Wert von ca. 0% bis ca. 40% betragen, besonders bevorzugt von ca. 8% bis ca. 16%.

Vorzugweise kann das Lignin oder die Lignin-Mischung für die kontrollierte Pyrolyse optional vorbehandelt werden, zum Beispiel, mit einem Tonmineral, um die Pyrolyse zu optimieren, insbesondere für eine kontinuierliche Pyrolyse.

Vorzugsweise kann die kontrollierte Pyrolyse bevorzugt mit mindestens einem Ofen oder/und mit mindestens einer Flamme erfolgen.

Vorzugsweise können für die kontrollierte Pyrolyse des Lignins oder einer Lignin-Mischung die kontrollierbaren Parameter bei der kontrollierten Pyrolyse zudem so gewählt und kontrolliert werden, dass keine erhöhten Werte an gesundheitsschädlichen Substanzen im Rauch entstehen, die anschließend zumindest in einem ersten oder/und in einem weiteren Destillat oder/und in einem trinkreifen Single Malt oder Whisky, messbar wären.

Gemäß einer Ausgestaltung können die Parameter der Pyrolyse so kontrolliert und variable eingestellt werden, so dass gewünschte Zersetzungsprodukte und Aromaspektren aus dem Lignin gezielt gebildet werden für das anschließende Räuchern von unterschiedlichen Komponenten bei die Single Malt- oder/und Whiskyherstellung.

Vorzugsweise können die kontrollierbaren Parameter der Pyrolyse so kontrolliert und variable eingestellt werden, so dass sich der Rauch in seiner Zusammensetzung unterscheiden kann und für unterschiedliche Verwendungen vorgesehen sein kann, wie zum Räuchern von entweder 1) vorwiegend festen Komponenten (wie z.B. Getreide, Malz, Holzpartikel, mindestens ein Behältnis), oder von 2) vorwiegend wässrigen Komponenten (wie z.B. Maische, Whiskybier, erstes Destillat), oder von 3) vorwiegend alkoholischen Komponenten (wie z.B. zweites und weiteres Destillat, Single Malt, Whisky), oder auch Kombinationen davon für die Single Malt- oder Whiskyherstellung.

Gemäß einer weiteren Ausgestaltung können die kontrollierbaren Parameter der Pyrolyse so kontrolliert und variable eingestellt werden, so dass ein einmaliges Räuchern einer der unterschiedlichen Komponenten für die Single Malt- oder/und Whiskyherstellung ausreichen kann, damit in einem ersten oder einem weiteren Destillat oder in einem trinkreifen Whisky oder trinkreifen Single Malt ein Raucharoma ohne störenden Aromakomponenten oder anderen störenden Nebenkomponenten, zumindest sensorisch, wahrnehmbar sind.

Vorzugsweise kann die kontrollierte Pyrolyse kontinuierlich oder diskontinuierlich erfolgen.

Gemäß einer Ausgestaltung kann die kontrollierte Pyrolyse unterschiedlich erfolgen: mit oder ohne Sauerstoff; optional kann die Pyrolyse auch im Vakuum erfolgen.

Gemäß einer anderen Ausgestaltung können für die kontrollierte Pyrolyse auch Katalysatoren verwendet werden, wie zum Beispiel, Zeolithe oder auch andere Katalysatoren; wobei für die Pyrolyse auch Bindemittel verwendet werden können, wie, zum Beispiel, Tonmineralien oder auch andere Bindemittel.

Vorzugsweise soll der Rauch, der bei der kontrollierten Pyrolyse entsteht und zum Räuchern verwendet wird, bevorzugt, schwefelfrei sein.

Gemäß einer Ausgestaltung kann das Hilfsmittel bevorzugt ein Gebläse mit erhitzter oder nicht erhitzter Luft oder einem inerten Gas oder ähnliches sein kann, um die zahlreichen flüchtigen Zersetzungsprodukte des Lignins im Rauch in einer messbaren und ausreichend hohen Konzentration, kontrolliert auszuleiten.

Vorzugsweise kann mit dem Verfahren ein trinkreifer, rauchiger Whisky oder ein trinkreifer, rauchiger Single Malt ganz ohne die Verwendung von Torf hergestellt werden.

### Vorteile der Erfindung

Lignin gehört zu den Biopolymeren, die in allen Pflanzen und Pflanzenteile vorkommen. Bei den meisten pflanzlichen Geweben beträgt der Ligninanteil nur etwa 1%, bei verholzten Pflanzenteilen bis über 30% der Gesamtmasse, man spricht in diesen Fällen von Lignocellulose. Neben Cellulose und Chitin ist Lignin das häufigste Polymer in der Natur. Lignin fällt zudem regelmäßig als Abfallstoff in der Industrie an, zum Beispiel, in der Papierindustrie.

Traditionell werden zum Räuchern Holz, Rinde, getrocknete Gräser, Kräuter und andere Pflanzen verwendet, die alle einen unterschiedlichen Ligninanteil haben und beim Räuchern unterschiedliche Raucharomen aufweisen. Somit kommt es beim Räuchern zu starken Abhängigkeiten des zu verbrennenden Materials. Für den typischen Geschmack eines Räucher-Guts spielen vor allem bestimmte Phenole, die insbesondere aus Lignin gewonnen werden, eine besondere Rolle

Für die Aromatisierung von alkoholischen Getränken werden insbesondere Holz und Torf verwendet. Hierfür wird die thermische Zersetzung zur Gewinnung von Aromakomponenten ausgenutzt, die direkt oder indirekt in alkoholische Getränke übergehen. So spielen Lignin-haltige Hölzer und Holzfässer bei der Aromatisierung von Wein und Sherry eine wichtige Rolle, wobei diese Hölzer und Fässer zusätzlich mit Feuer behandelt sein können.

Bei der Herstellung von rauchigem Whisky wird traditionell Torf verwendet. Der Ligningehalt im Torf ist deutlich niedriger, als in Hölzern. Nach dem Räuchern müssen Phenole aus dem Torf vom Grünmalz bis zum trinkreifen Whisky eine lange Reihe von Prozeduren über sich ergehen lassen. Infolgedessen nimmt der Phenolgehalt bei der Whiskyherstellung zum Teil deutlich ab und kann in der Flasche sogar nur noch etwa ein Drittel oder geringer von dem Ursprungswert betragen, der an rauchigen und torfigen Aromaträgern noch unmittelbar nach dem Darren im Grünmalz vorlag.

Es wurde nun überraschenderweise und vorteilhaft gefunden, dass mit dem erfindungsgemäßen Verfahren zur Auswahl und zur kontrollierter Pyrolyse von isoliertem reinen Lignin und dessen anschließenden Verwendung zum Räuchern bei der Whiskyherstellung, effizient, ökonomisch und nachhaltig ganz unterschiedliche Komponenten bei die Whiskyherstellung geräuchert werden können und sich somit rauchige Single Malts und rauchige Whiskys herstellen lassen, insbesondere auch ohne die traditionelle Verwendung von Torf.

Vorteilhaft werden bei dem erfindungsgemäßen Verfahren isolierte reine Lignine verwendet, die aufgrund von chemisch-physikalischen Aufschluss- oder Vor- und Nachbehandlungsverfahren bereits extrahiert oder isoliert worden sind und eine vergleichsweise hohe Reinheit und je nach Produkt auch eine hohe Homogenität aufweisen können. Aufgrund dieser Reinheit sind solche isolierten reine Lignine gut geeignet für eine kontrollierte Pyrolyse zur Erzeugung von Rauch und anschließender Räucherung von unterschiedlichen Komponenten für die Whiskyherstellung unter Vermeidung von störenden Aromakomponenten und störenden Nebenkomponenten.

Somit müssen bei der Whiskyherstellung und Single Malt-Herstellung mittels erfindungsgemäßem Verfahren keine störenden Nebenkomponenten und Aromakomponenten durch zeit- und kostenaufwendige Lagerung abgebaut werden. Auch müssen erfindungsgemäße rauchige Single Malts und rauchige Whiskys vorteilhaft eher nicht verschnitten werden, um störende Nebenkomponenten und Aromakomponenten zu reduzieren.

Somit ist aufgrund des erfindungsgemäßen Verfahrens unter erfinderischer und vorteilhafter Verwendung von isoliertem reinen Lignin und anschließender kontrollierter Pyrolyse deutlich weniger Nachbehandlung bei der Whiskyherstellung notwendig. Dadurch reduzieren sich vorteilhaft Arbeitskosten, Lagerkosten, Transportkosten, Energiekosten. Insgesamt verbessert sich dadurch auch vorteilhaft die Umweltbilanz bei der Whiskyherstellung. Auch ist es möglich bei der Auswahl der isolierten reinen Lignine auf regionale Produkte zu achten, was die Umweltbilanz nochmals erhöhen kann.

Des Weiteren lassen sich mit dem erfinderischen Verfahren die Entstehung von gesundheitsschädlichen Substanzen beim Räuchern besser kontrollieren und minimieren, da isolierte reine Lignine bereits chemisch-physikalisch aufgereinigt wurden, zudem nach mehreren Auswahlschritten zur Minimierung von Schadstoffen nochmals weiter ausgewählt werden können und zudem unter kontrollierter Pyrolyse mittels zahlreicher kontrollierter Parameter thermisch zersetzt werden, zum anschließenden Räuchern von unterschiedlichen Komponenten für die Whiskyherstellung, ohne dass erhöhte Werte an gesundheitsschädlichen Substanzen im Rauch entstehen, die anschließend zumindest in einem ersten oder/und in einem weiteren Destillat oder/und in einem trinkreifen Single Malt oder Whisky, messbar wären. In vielen chemischen Reaktionen bewirken die Zersetzungsprodukte erst eine Verunreinigung des zu Beginn reinen oder deutlich reineren Ausgangsmaterials. Mittels erfindungsgemäßer Verfahren können gesundheitsschädliche Substanzen vorteilhaft minimiert werden.

Vor allem entsteht mit dem erfindungsgemäßen Verfahren und insbesondere durch die kontrollierte Pyrolyse, ein Rauch, der sich für das Räuchern von ganz unterschiedlichen Komponenten bei der Single Malt - oder Whiskyherstellung eignet, insbesondere dadurch eignet, dass bei der Whiskyherstellung in einem ersten oder/und einem weiteren Destillat oder in einem trinkreifen Whisky oder Single Malt ein Raucharoma ohne störende Aromakomponenten oder andere störende Nebenkomponenten, zumindest sensorisch, wahrnehmbar ist.

Die kontrollierbaren Parameter für die kontrollierte Pyrolyse lassen sich insbesondere auch so wählen, dass der Verwendungszweck des Rauches sich wie folgt unterscheiden kann: Rauch zum Räuchern von entweder 1) vorwiegend festen Komponenten (wie z.B. Getreide, Malz, Holzpartikel), oder von 2) vorwiegend wässrigen Komponenten (wie z.B. Maische, Whiskybier, erstes Destillat), oder von 3) vorwiegend alkoholischen Komponenten (wie z.B. zweites und weiteres Destillat, Single Malt, Whisky), oder auch Kombinationen davon für die Single Malt- oder Whiskyherstellung.

Dieser unterschiedliche Verwendungszweck kann erfinderisch und vorteilhaft durch das erfindungsgemäße Verfahren mit kontrollierter Pyrolyse berücksichtigt, gesteuert und kontrolliert werden. Neben der erfinderischen, gezielten Auswahl an isoliertem reinen Lignin nach mehreren Auswahlkriterien haben, des Weiteren, folgende kontrollierbaren Parameter bei der kontrollierten Pyrolyse einen wesentlichen Einfluss auf die Erzeugung des Rauches und insbesondere auf die Erzeugung bestimmter Raucharomen: die Ligninzusammensetzung, die Restfeuchtigkeit des Lignins, die Darreichungsform, die Heizrate, die Reaktionstemperatur und damit die Pyrolysegeschwindigkeit, der Sauerstoffgehalt, die Feuchtigkeit bei der Pyrolyse insgesamt, der Druck, die Verweilzeit, die optionale Verwendung von Katalysatoren oder/und Bindemittel.

Die Ligninzusammensetzung wird durch das erfindungsgemäße Verfahren mittels mehrere Auswahlkriterien vorselektiert. Insbesondere ist es vorteilhaft für das erfindungsgemäße Verfahren, wenn das isolierte reine Lignin oder die Lignin-Mischung schwefelfrei ist. Die Auswahl des Lignins kann aufgrund unterschiedlicher chemischer Zusammensetzung einen großen Einfluss haben auf das Aromaspektrum und die Bildung von unerwünschten Substanzen im Rauch.

Die Restfeuchtigkeit des isolierten reinen Lignins hat einen großen Einfluss auf den Wirkungsgrad und die Effizienz der Pyrolyse sowie auch auf die sich bildenden unterschiedlichen Aromakomponenten und Schadstoffe, Unterschieden wird bei der Feuchtigkeit des Lignins der Wasseranteil in der Masse und der Wasseranteil in der Gesamtmasse. Zur Vorbereitung der erfindungsgemäßen kontrollierten Pyrolyse ist eine Messung der Feuchtigkeit des Lignins oder der Lignin-Mischung sinnvoll. Die Restfeuchtigkeitsgehalt des Lignins oder der Lignin-Mischung sollte einen Wert von ca. 6% bis ca. 40% betragen, bevorzugt einen Wert von ca. 8% bis ca. 16%.

Die Darreichungsform des isolierten reinen Lignins, bevorzugt als Pulver oder als Granulat, möglicherweise aber auch in kompaktierter Form oder auch Mischungen daraus, hat einen großen Einfluss auf die Heizrate und auf die Pyrolyse insgesamt. Somit kann man durch die Auswahl und Kontrolle der Darreichungsform die Bildung von unterschiedlichen oder gezielten Aromakomponenten und die Entstehung von Schadstoffen steuern. Auch ein unterschiedlicher Mahlgrad eines isolierten reinen Lignin-Pulvers kann besonders vorteilhaft für die Erzeugung gezielter Aromakomponenten sein.

Die pyrolytische Zersetzung von Lignin ist ein endothermer Prozess d. h. es muss Energie zugeführt werden. Neben der Energie benötigt die chemischer Zersetzungsprozess Zeit. Der Zersetzungsprozess (Ligninpyrolyse) ist dann insgesamt von der Heizgeschwindigkeit oder der Heizrate (K/min) abhängig. Beispielsweise wird durch eine hohe Heizrate (> 10 K/min) das Lignin schnell auf hohe Temperaturen gebracht. Dies kann die Reaktionstemperatur schnell erhöhen und die Reaktionsdauer durch Beschleunigung der Pyrolyse verkürzen. Bei kleinerer Heizrate kann sich das Lignin lange bei Temperaturen befinden, bei denen eine gewünschte Zersetzung stattfinden kann. Dadurch könnte sich aber auch eine größere Menge an unerwünschten Verunreinigungen bilden. Je nach erfindungsgemäßer Ligninzusammensetzung kann sich die Heizrate bei der Pyrolyse unterscheiden, um vorteilhafte oder gezielte Raucharomen zu erzeugen und unerwünschte Schadstoffe zu unterbinden. Die Reaktionswärme ist aber insgesamt unabhängig von der Heizgeschwindigkeit, falls sich der Mechanismus der Reaktion nicht mit der Temperatur ändert.

Auch die Reaktionstemperatur und damit die Pyrolysegeschwindigkeit haben einen großen Einfluss auf die Bildung von unterschiedlichen Aromakomponenten sowie auf die Bildung von unterschiedlichen Schadstoffen. In vielen chemischen Reaktionen bewirken die Zersetzungsprodukte erst eine Verunreinigung des zu Beginn reinen oder deutlich reineren Ausgangsmaterials. Dies kann bei der kontrollierten Pyrolyse gesteuert werden.

Durch den Sauerstoffgehalt bei der Pyrolyse kann man den Zersetzungsprozess des Lignins oder der Lignin-Mischung sowie die Entstehung von Aromakomponenten und von Schadstoffen weiter kontrollieren und gezielt beeinflussen. Insbesondere kann auch die weitere Oxidation der Ligninzersetzungsprodukte beeinflusst werden. Bei einem zu hohen Sauerstoffgehalt kann es insbesondere zur oxidativen Zersetzung kommen, was wiederum Einfluss auf die Bildung von gezielten Raucharomen und gezielten Schadstoffe haben kann.

Die Feuchtigkeit bei der Pyrolyse insgesamt spielt insbesondere bei niedrigen Heizraten eine wichtige Rolle, Des Weiteren haben unterschiedliche Ligninzusammensetzungen und unterschiedliche Darreichungsformen unterschiedliche Restfeuchtigkeiten. Dies hat ebenfalls einen Einfluss auf die Bildung von Aromakomponenten und Schadstoffe im Rauch.

Der Druck bei der Pyrolyse steht meist im Verhältnis zur Feuchtigkeit bei der Pyrolyse und kann daher in Korrelation eingestellt werden, Auch dieser Parameter hat einen Einfluss auf die Bildung von Aromakomponenten und Schadstoffe im Rauch.

Die Verweilzeit des Lignins während der Pyrolyse hat ebenfalls einen Einfluss auf die Bildung von Aromakomponenten und auf Schadstoffe, insbesondere auch auf die Bildung von Nebenreaktion. Aufgrund von Variationen der Darreichungsformen des Lignins kann sich die Verweilzeit des Lignins bei der Pyrolyse deutlich unterschieden.

Des Weiteren, kann durch die optionale Verwendung von Katalysatoren die benötigte Reaktionstemperaturen gesenkt werden. Zudem werden Katalysatoren, wie Zeolithe, häufig aufgrund ihrer Verfügbarkeit, geringen Kosten, thermischen Stabilität, Azidität, Porosität und hervorragenden katalytischen Selektivität und Fähigkeit zur Hemmung der Verkohlung in der katalytischen Pyrolyse von Ligninen eingesetzt. Katalysatoren werden auch für die Hemmung der Teerproduktion und die Reduktion der Kohleagglomeration eingesetzt. Optional können auch Bindemittel verwendet werden, wie, zum Beispiel, Tonmineralien oder auch andere Bindemittel.

Mit dem erfindungsgemäßen Verfahren lassen sich überraschenderweise und vorteilhaft schnell, einfach, zuverlässig, technisch leicht realisierbar, leicht skalierbar und kostengünstig, verschiedene isolierte reine Lignine auswählen , für eine anschließende kontrollierte Pyrolyse mittels mehrere kontrollierbaren Parametern zur Erzeugung von Rauch zum Räuchern von sehr unterschiedlichen Komponenten bei der Herstellung von rauchigen Whiskys und rauchigen Single Malts.

Mit dem erfindungsgemäßen Verfahren eröffnen sich neue Möglichkeiten effizient und ökonomisch rauchige Single Malts und rauchige Whiskys herzustellen mit zahlreichen neuen Raucharomaspektren und Raucharomaintensitäten sowie neue Produktpaletten für eine breite Geschmacksvielfalt.

Zudem benötigt man mit der erfinderischen Verwendung von isoliertem reinen Lignin bei der Räucherung vorteilhaft insgesamt weniger Ausgangsmaterial, als vergleichsweise bei der Räucherung mit Torf oder Holz. Denn bei der Räucherung ist hauptsächlich der Bestandteil Lignin entscheidend für die Bildung der phenolischen aromagebenden Substanzen. Durch die erfinderische Verwendung von isoliertem reinen Lignin lassen sich vorteilhaft die aromagebenden Substanzen im Rauch erhöhen und konzentrieren, was zu einem intensiveren Räuchern und intensiveren Raucharomen führen kann.

Das Räuchern wird somit intensiver, schneller, konzentrierter, aromatischer, vielfältiger, platzsparender, vielfältiger, denn mit isoliertem reinen Lignin lässt sich eine erhöhte und auch neue Aromadichte generieren sowie das Aromaspektrum stärker steuern und intensivieren bei weniger Schwankungen. Ferner entstehen weniger Brandabfälle und weniger Asche.

Durch die erfinderische Verwendung von isoliertem reinen Lignin zur Erzeugung von Rauch wird weniger Ausgangsmaterial nötig, die Transport-, Lager- und Energiekosten werden geringer, es gibt eine einfachere Handhabung sowohl für ein diskontinuierliches oder auch ein kontinuierliches Pyrolyse-Räucher-Verfahren. Zudem ist die Erzeugung und Verwendung von Rauch für die Industrie besser skalierbar.

Des Weiteren ist eine größere Produktvielfalt der geräucherten unterschiedlichen Komponenten möglich, da mit dem erfindungsgemäßen Verfahren bestimmte Aromaspektren im Rauch gezielt wiederholbar generiert werden können und neue Räucherergebnisse ermöglicht werden. Auch sind durch ein mehrfaches Räuchern mittels erfindungsgemäßen Verfahren nochmals vielfältigere Aromaspektren zur Herstellung neuer und breiterer Produktpaletten möglich. Auch lässt sich isoliertes reines Lignin gut Bevorraten und Lagern.

Die erfinderische Verwendung von isoliertem reinen Lignin ist deutlich nachhaltiger und umweltfreundlicher und eine gute Alternative zur bisherigen traditionellen Verwendung von Torf oder auch von Holz bei der Whiskyherstellung. Das reine Lignin wird aus nachwachsenden pflanzlichen Rohstoffen isoliert und der weitere Abbau von Torf kann reduziert oder ganz vermieden werden.

Auch ist die erfinderische Verwendung von mehrfach ausgewähltem isolierten reinen Lignin gegenüber einer Verwendung von Holz zur Erzeugung von Rauch deutlich vorteilhafter. In Hölzern können zahlreiche, unvorhergesehene, störende Substanzen enthalten sein, die sich nach der thermischen Belastung geschmacklich und gesundheitlich negativ bei der Rauchentwicklung und bei der Räucherung auswirken.

Holz variiert deutlich im Vorhandensein von metallischen Mineralien darunter Alkalimetalle, Erdalkalimetalle und Übergangsmetalle. Diese verändern die Eigenschaften und die Produktverteilung bei der Verbrennung von Holz. So kann, zum Beispiel, die Bildung von Koks und Gasprodukten begünstigt werden, während die Wirkung von Teer und aromatischen Verbindungen in der Gasphase je nach Metallart unterschiedlich ist.

Aufgrund des hohen Anteils an Cellulose und Hemicellulose entstehen bei der Pyrolyse von Holz deutlich mehr Säuren, Hydrocarbone, Furane und Ketone. Zudem kann es auch zu chemischen Interaktionen zwischen den Zersetzungsprodukten von Holocellulose und Lignin kommen. Insbesondere können von Polysacchariden abgeleitete Moleküle unterschiedliche störende Auswirkungen haben, da es zu chemischen Wechselwirkungen zwischen Polysacchariden und Lignin kommen kann.

Prinzipiell gibt es bei der Pyrolyse eine positive Korrelation zwischen Cellulose und Ketonen, sowie zwischen Holocellulose und Furanen, sowie zwischen Lignin und Phenole.

Durch die erfindungsgemäße Verwendung von isoliertem reinem Lignin zum Räuchern lässt sich der Gehalt an aromagebenden Phenolkomponenten im Rauch vorteilhaft und erfinderisch erhöhen. Insbesondere die Entstehung zahlreicher phenolischer Verbindungen bei der Pyrolyse liefert die wichtigen Aromastoffe des Räucherns. Neben Geschmacksbildung spielen sie auch eine Rolle bei der Färbung und bei der Konservierung.

Lignin ist ein nachwachsendes, phenolisches Polymer. Zur Gewinnung von Rauch wird isoliertes reines Lignin thermisch zersetzt (Pyrolyse) und in niedermolekulare Produkte gespalten, wie Ligninfragmente, Monophenole und kleine Oligomere.

Je nach Temperatur findet eine intensive Strukturzersetzung statt. Es entstehen u.a. folgende Produkte: Phenole, Methylphenole (Cresole), Methyl-, Ethyl- und Vinylguajakol, Vanillin und Acetovanillon, sowie Isopropylguajakol, Eugenol und Isoeugenol. Diese Komponenten werden überwiegend als Erzeuger der Raucharomen beschrieben.

Lignin zersetzt sich thermisch über einen breiten Temperaturbereich, da verschiedene funktionelle Sauerstoff Gruppen des Lignins unterschiedliche thermische Stabilität aufweisen. Methoxy ist eine wichtige funktionelle Gruppe in Lignin, die den Repolymerisationsgrad von Lignin während der Pyrolyse beeinflussen kann und außerdem, als wichtiger Faktor zur Förderung der Bildung von Kohlerückständen definiert wird. Der Grad der Vernetzung und der Kondensation innerhalb einer Lignin-Struktur sind weitere Faktoren, die den Schmelzpunkt beeinflussen können.

Eine Pyrolyse von Lignin kann bei unterschiedlichen Temperaturen erfolgen. Prinzipiell werden Phenole zwischen einem Temperaturbereich von 200°C bis 850°C gebildet. Man unterscheidet die sogenannte primäre Pyrolysereaktionen bei 200-400°C und die sekundären Pyrolysereaktionen bei über 400 °C. Mit der Verbrennungstemperatur lässt sich somit die Bildung verschiedener Phenole steuern.

Für die Whiskyherstellung wichtige Phenole sind insbesondere die Kresole (*ortho-, meta-* und *para*-Kresol), 4-Ethylphenol, Xylenol, Guajakol und das 4-Ethylguajakol mit jeweils unterschiedlichen aromatischen Eigenschaften. Phenol, die Kresole, Xylenol und das 4-Ethylphenol bezeichnet man bei rauchigen Whiskys als "medizinisch", während das Guajakol als "rauchig" und "teerartig" beschrieben wird. Das 4-Ethylguajakol wird als "würzig" und "süß" bezeichnet.

Bei einer niedrigeren Temperatur entstehen durch die vornehmliche Bildung von Guajakol mehr rauchige und würzige Aromen, wie Nelke und Zimt, während sich bei einer höheren Verbrennungstemperatur mehr medizinische, holzige, ätherische Aromen bilden, aufgrund der Bildung von Kresole und Phenol im Rauch.

Die Zersetzung des Lignin-Biopolymers beginnt zwar bei relativ niedrig Temperaturen von 200 - 275 °C die meisten Zersetzungsprozesse des Lignins finden aber bei Temperaturen von 400 - 600°C statt. Hierbei entstehen aromatische Kohlenwasserstoffe, Phenole, Hydroxyphenole und Guajacyl-/Syringyl-artige Verbindungen, die meisten Produkte haben phenolische -OH-Gruppen. Besonders Guajakole und Syringole sind intermediär Abbauprodukte, deren Menge mit steigender Pyrolysetemperatur abnimmt. Phenolische Verbindungen sind die Hauptkomponenten die sowohl temperatur- als auch zeitinduziert sind. Mit steigender Temperatur wird die Produktion phenolischer Monomere aufgrund der steigenden Umwandlungsrate von Lignin deutlich gesteigert. Monophenole sind die Hauptkomponenten im Temperaturbereich von 450-525 °C, und höhere Temperaturen begünstigen die Bildung von Dimeren.

Niedrige Erwärmungsraten begünstigen die Bildung sauerstoffhaltiger Verbindungen, während mehr Kohlenwasserstoffe und Alkylphenol Derivate bei schnellen Erwärmungsraten gebildet werden.

Aufgrund von Sekundärreaktionen mit verlängerter Reaktionszeit werden mehr Phenolmonomere in leichte Gase umgewandelt, was zu keiner weiteren Steigerung der Nachweisreaktion von Phenolmonomeren bei 600 °C führt, wenn die Verweilzeit zunimmt.

Nicht-konjugierte Carbonyl-, konjugierte Carbonyl-, Aromaten-, Guaiacyl- und Syringylgruppen in Lignin sind alle temperaturinduziert und können zusammen mit der Freisetzung von Seitenketten in aromatische Verbindungen umgewandelt werden, um bei steigender Pyrolysetemperatur leichte Gase zu bilden.

Durch die optionale Zugabe von Katalysatoren, wie, zum Beispiel, Zeolithe, können die benötigten Reaktionstemperaturen auch gesenkt werden.

Zudem kann eine Vorbehandlung des Lignins eine Verbesserung bei der Pyrolyse bewirken. Eine Vorbehandlung kann die Selektivität gegenüber Phenolen und Aromaten erhöhen oder auch die kontinuierliche Einspeisung des Lignins in einen Ofen erleichtern, um das vorzeitige Schmelzens des Lignins zu vermeiden.

Darüber hinaus ist die Heizrate ein weiterer wichtiger Faktor für die Ligninpyrolyse. Die zunehmende Heizrate kann die Reaktionstemperatur erhöhen und die Reaktionsdauer durch Beschleunigung der Pyrolyse verkürzen.

Wie die Ausführungsbeispiele zeigen, ist das erfinderische Verfahren, bestmöglichst geeignet, für die Herstellung von rauchigen Whiskys und rauchigen Single Malts, sowie für das Räuchern von ganz unterschiedlichen Komponenten für die Single Malt- und Whiskyherstellung, inbesondere auch ohne die Verwendung von Torf.

Im Folgenden wird die Erfindung anhand bevorzugter Ausführungsbeispiele näher beschrieben, welche lediglich zu Veranschaulichungszwecken angegeben sind und in keiner Weise den Schutzbereich der vorliegenden Erfindung einschränken sollen.

Die für die folgenden Beispiele verwendeten isolierten reine Lignine sind handelsübliche isolierte reine Lignine mit unterschiedlichem chemisch-physikalischen Aufschluss- oder Vor- und Nachbehandlungsverfahren. Die für die folgenden Beispiele verwendete Vorrichtungen zur kontrollierten Pyrolyse und zum Räuchern sind handelsübliche Vorrichtungen.

### Beispiel 1: Auswahl eines isolierten reinen Lignins nach dessen pflanzlichem Ursprung

Das Polymer Lignin kann von ca. 1% bis ca.30% der Biomasse einer Pflanze ausmachen, wobei die chemische Struktur des Lignin-Polymers je nach Pflanzenart und je nach Pflanzenbestandteil und je nach Wachstumsbedingung stark variieren kann. So können sich Lignine unterschiedlicher Pflanzen auch stark unterscheiden bezüglich der Anzahl an Schwefel-Gruppen, was deren anschließende Verwendung beeinträchtigen kann.

Insbesondere enthalten verschiedene Lignin auch biochemisch unterschiedliche funktionelle Gruppen, wie aliphatische und phenolische Hydroxylgruppen, Carbonylgruppen, Methoxygruppen und Phenylgruppen,die zudem in unterschiedlichen Mengen und Anteilen an aromatische oder aliphatische Einheiten gebunden sind, was zu sehr unterschiedlichen Ligninzusammensetzungen und - strukturen führen kann. Methoxy ist eine wichtige funktionelle Gruppe in Lignin, die, zum Beispiel, den Repolymerisationsgrad von Lignin während der Pyrolyse beeinflussen kann.

Diese funktionellen Gruppen sind auch wichtige aktive Zentren für weitere chemische Aufschluss- oder Isolations- oder Vor- und Nachbehandlungsverfahren sowie Modifikationsverfahren, durch Sulfonierung, Oxidation, Kraft Kopolymerisation und durch Hydroxymethylierungsreaktionen.

Weichholz-Lignine ergeben, zum Beispiel, bei der Pyrolyse hauptsächlich Guajakole als Zersetzungsprodukt, und dessen Derivate Methylguajakol, Ethylguajakol - während Hartholz-Lignine sowohl Guajakole als auch Syringole ergeben.

Für das erfindungsgemäße Verfahren wird die Auswahl des isolierten reinen Lignins nach dessen pflanzlichen Ursprung, so gewählt, dass bei der anschließenden kontrollierten Pyrolyse des Lignins ein Rauch entsteht, der sich für das erfindungsgemäße Räuchern von verschiedenen Komponenten bei der Single Malt - oder Whiskyherstellung eignet, insbesondere dadurch eignet, dass bei der Whiskyherstellung in einem ersten oder einem weiteren Destillat oder in einem trinkreifen Whisky oder Single Malt ein Raucharoma ohne störenden Aromakomponenten oder anderen störenden Nebenkomponenten, zumindest sensorisch, wahrnehmbar ist; wobei für das Verfahren auch mehrere isolierte reine Lignine mit unterschiedlichen pflanzlichen Ursprung kombiniert werden können.

Vorzugsweise soll der Rauch, der bei der kontrollierten Pyrolyse entsteht und zum Räuchern verwendet wird, bevorzugt, schwefelfrei sein.

Das erfindungsgemäße Verfahren führt je nach Auswahl des isolierten reinen Lignins nach dessen pflanzlichen Ursprung, zu sehr unterschiedlichen Ergebnissen. Manche isolierte reine Lignine eignen sich für das erfindungsgemäße Verfahren und zur anschließenden Herstellung von rauchigen Single Malts oder rauchigen Whiskys. Andere isolierte reine Lignine eigenen sich nicht für das erfindungsgemäße Verfahren (siehe Beispiele 2 und 3).

### Beispiel 2: Auswahl verschiedener Lignine nach unterschiedlichem pflanzlichem Ursprung für die Pyrolyse und anschließender Verwendung (erstes Destillat)

Unterschiedliche isolierte reine Lignine (a, b, c, d, e) von verschiedenen Herstellern mit unterschiedlichem pflanzlichem Ursprung aber sehr ähnlichen oder bevorzugt gleichen Aufbereitungsmethoden, werden erfindungsgemäß mittels kontrollierter Pyrolyse zum Räuchern von ersten Destillaten für die Single Malt- oder Whiskyherstellung getestet und nach ihrer erfindungsgemäßen Eignung geprüft.
a) Das rauchige erste Destillat a ("Low Wine") unter Verwendung von Lignin a hat folgende sensorische Eigenschaften: Gaumen: schlechte und störende Aromen, Nase: störende Aromen. Ungenießbar.
b) Das rauchige erste Destillat b ("Low Wine") unter Verwendung von Lignin b hat folgende sensorische Eigenschaften: Gaumen: schlechte und störende Aromen, starke Raucharomen, Nase: störende Aromen, starke Raucharomen. Ungenießbar.
c) Das rauchige erste Destillat c ("Low Wine") unter Verwendung von Lignin c hat folgende sensorische Eigenschaften: Gaumen und Nase runde angenehme rauchige und würzige Aromen nach Holz, Nelke, Zimt. Alle Raucharomen ohne störende Aromakomponenten oder andere störende Nebenkomponenten. Trinkreife. Chemische Analysen zeigen zudem, dass das rauchige erste Destillat c ("Low Wine") zumindest viel höhere Werte an Guajacol aufweist, im Vergleich zu einem nicht geräucherten ersten Destillat.
d) Das rauchige erste Destillat d ("Low Wine") unter Verwendung von Lignin d hat folgende sensorische Eigenschaften: Gaumen schlechte und störende Aromen, leichtes Raucharoma, Nase störende Aromen. Ungenießbar.
e) Das rauchige erste Destillat e ("Low Wine") unter Verwendung von Lignin e hat folgende sensorische Eigenschaften: Gaumen und Nase starke rauchige und würzige Aromen nach Kräutern und Holz. Alle Raucharoma ohne störende Aromakomponenten oder andere störende Nebenkomponenten. Trinkreife. Chemische Analysen zeigen zudem, dass das rauchige erste Destillat e ("Low Wine") zumindest viel höhere Werte an Guajacol aufweist, im Vergleich zu einem nicht geräucherten ersten Destillat.

### Beispiel 3: Auswahl verschiedener Lignine nach unterschiedlichem pflanzlichem Ursprung für die Pyrolyse und anschließender Verwendung (Whisky)

Unterschiedliche isolierte reine Lignine ( a, b, c, d ) von verschiedenen Herstellern mit unterschiedlichem pflanzlichem Ursprung aber sehr ähnlichen oder bevorzugt gleichen Aufbereitungsmethoden werden erfindungsgemäß mittels kontrollierter Pyrolyse zum Räuchern von Whisky getestet und nach ihrer erfindungsgemäßen Eignung geprüft.
a) Der rauchige Whisky a unter Verwendung von Lignin a hat folgende sensorische Eigenschaften: Gaumen und Nase runde rauchige und leicht würzige Aromen nach Holz und etwas Kräuter. Alle Raucharoma ohne störende Aromakomponenten oder andere störende Nebenkomponenten. Trinkreife. Chemische Analysen zeigen zudem, dass der rauchige Whisky a zumindest viel höhere Werte an Guajacol aufweist, im Vergleich zu einem nicht geräucherten Whisky.
b) Der rauchige Whisky b unter Verwendung von Lignin b hat folgende sensorische Eigenschaften: Gaumen und Nase angenehme rauchige und leicht würzige Aromen nach Holz und Wald, etwas Zimt und Süße. Alle Raucharomen ohne störende Aromakomponenten oder andere störende Nebenkomponenten. Trinkreife. Chemische Analysen zeigen zudem, dass der rauchige Whisky b zumindest viel höhere Werte an Guajacol aufweist, im Vergleich zu einem nicht geräucherten Whisky.
c) Der rauchige Whisky c unter Verwendung von Lignin c hat folgende sensorische Eigenschaften: Gaumen: schlechte und störende Aromen, zu starke Raucharomen, ätherisch, Nase: deutlich störende Aromen, ätherisch, zu starke Raucharomen. Ungenießbar.
d) Der rauchige Whisky d unter Verwendung von Lignin d hat folgende sensorische Eigenschaften: Gaumen: deutlich störende Aromen, Süße, Nase: störende Aromen, medizinisch. Ungenießbar.

### Beispiel 4: Auswahl eines isolierten reinen Lignins nach dessen chemisch-physikalischen Aufschluss- oder Vor- und Nachbehandlungsverfahren

Der Biopolymer Lignin zeichnet sich insbesondere durch eine Vielfalt ausgeprägter und chemisch unterschiedlicher Bindungsmotive aus, die jeweils andere Bedingungen zur Spaltung und Fragmentierung erfordern.

Demgemäß wurde zur Isolierung von Lignin sehr unterschiedliche Aufschlussmethoden etabliert. Je nach Aufschluss- oder Isolations- oder Vor- und Nachbehandlungsverfahren variieren anschließend die Beschaffenheit und die Eigenschaften des fragmentierten Lignins, zum Beispiel, die Reinheit, die chemische Struktur, das Molekülgewicht. Insbesondere können die Lignin-Fragmente auch Schwefel enthalten oder schwefelfrei sein. Beispielhafte Aufschlussmethoden und dessen Lignine sind: Sulfit-Prozess/ Sulfit-Lignin, Kraft-Prozess/ Kraft-Lignin, Soda-Prozess /Natron-Lignin, Organosolv-Prozess/ Organosolv-Lignin. Des Weiteren gibt es, zum Beispiel, das Sulfat-Verfahren das Acetocell-Verfahren das gefrästes Holzlignin (MWL), saure Lignine, cellulolytische Enzym-Lignine (CEL), enzymatische milde Acidolysis-Lignine (EMAL) und Lignine aus dem Thioacidolyse-Prozess.

Ein Sulfit-Lignin produziert bei einer Pyrolyse eine große Anzahl von Furanverbindungen sowie Schwefelverbindungen, was für das erfindungsgemäße Verfahren weniger geeignet ist. Lignine aus Zellstoffwerken, enthalten meist einen hohen Anteil an Schwefelverbindungen, was auch für das erfindungsgemäße Verfahren problematisch ist.

Für das erfindungsgemäße Verfahren wird die Auswahl des isolierten reinen Lignins nach dessen chemisch-physikalischen Aufschluss- oder Isolations- oder Vor- und Nachbehandlungsverfahren so gewählt, dass bei der anschließenden Pyrolyse des Lignins ein Rauch entsteht, der sich für das erfindungsgemäße Räuchern von verschiedenen Komponenten bei der Single Malt - oder Whiskyherstellung eignet, insbesondere dadurch eignet, dass bei der Whiskyherstellung in einem ersten oder einem weiteren Destillat oder in einem trinkreifen Whisky oder Single Malt ein Raucharoma ohne störenden Aromakomponenten oder anderen störenden Nebenkomponenten, zumindest sensorisch, wahrnehmbar ist; wobei für das Verfahren auch mehrere isolierte reine Lignine mit unterschiedlichen Aufschluss- oder Vor- und Nachbehandlungsverfahren für die Auswahl kombiniert werden können.

Vorzugsweise soll der Rauch, der bei der kontrollierten Pyrolyse entsteht und zum Räuchern verwendet wird, bevorzugt, schwefelfrei sein.

Das erfindungsgemäße Verfahren führt je nach Auswahl des isolierten reinen Lignins nach dessen chemisch-physikalischen Aufschluss- oder Isolations- oder Vor- und Nachbehandlungsverfahren zu sehr unterschiedlichen Ergebnissen. Manche isolierte reine Lignine eignen sich für das erfindungsgemäße Verfahren und zur anschließenden Herstellung von rauchigen Single Malts oder rauchigen Whiskys. Andere isolierte reine Lignine eigenen sich nicht für das erfindungsgemäße Verfahren (siehe Beispiele 5 und 6).

### Beispiel 5: Auswahl verschiedener Lignine nach deren chemisch-physikalischen Aufschluss- oder Vor- und Nachbehandlungsverfahren für die Pyrolyse und Verwendung (erstes Destillat)

Unterschiedliche isolierte reine Lignine ( a, b, c, d, e ) von verschiedenen Herstellern mit sehr ähnlichem oder gleichem pflanzlichen Ursprung aber aus unterschiedlichem chemisch-physikalischen Aufschluss- Isolations- oder Vor- und Nachbehandlungsverfahren werden mittels kontrollierter Pyrolyse zum Räuchern von ersten Destillaten für die Single Malt- oder Whiskyherstellung verwendet und nach deren erfindungsgemäßen Eignung geprüft.
a) Das rauchige erste Destillat a ("Low Wine") unter Verwendung von Lignin a hat folgende sensorische Eigenschaften: Gaumen: schlechte und störende Aromen, Nase: störende Aromen. Ungenießbar.
b) Das rauchige erste Destillat b ("Low Wine") unter Verwendung von Lignin b hat folgende sensorische Eigenschaften: Gaumen und Nase: angenehm würzig und runde Raucharomen nach Holz und Kräutern. Alle Raucharoma ohne störende Aromakomponenten oder andere störende Nebenkomponenten. Trinkreife.
   Chemische Analysen zeigen zudem, dass das rauchige erste Destillat b ("Low Wine") zumindest viel höhere Werte an Guajacol aufweist, im Vergleich zu einem nicht geräucherten ersten Destillat.
c) Das rauchige erste Destillat c ("Low Wine") unter Verwendung von Lignin c hat folgende sensorische Eigenschaften: Gaumen: schlechte und störende Aromen, deutliche süße, medizinisch, Nase: störende Aromen. Ungenießbar.
d) Das rauchige erste Destillat d ("Low Wine") unter Verwendung von Lignin d hat folgende sensorische Eigenschaften: Gaumen: schlechte und störende Aromen, medizinisch, Nase: störende Aromen, medizinisch. Ungenießbar
e) Das rauchige erste Destillat e ("Low Wine") unter Verwendung von Lignin e hat folgende sensorische Eigenschaften: Gaumen: schlechte und störende Aromen, dominantes Raucharoma, Nase: dominantes Raucharoma, störende Aromen. Ungenießbar.

### Beispiel 6: Auswahl verschiedener Lignine nach deren chemisch-physikalischen Aufschluss- oder Vor- und Nachbehandlungsverfahren für die Pyrolyse und Verwendung (Whisky)

Unterschiedliche isolierte reine Lignine ( a, b, c, d ) von verschiedenen Herstellern mit sehr ähnlichem oder gleichem pflanzlichen Ursprung aber aus unterschiedlichem chemisch-physikalischen Aufschluss- Isolations- oder Vor- und Nachbehandlungsverfahren werden mittels kontrollierter Pyrolyse zum Räuchern von Whisky verwendet und nach deren erfindungsgemäßen Eignung geprüft.
a) Der rauchige Whisky a unter Verwendung von Lignin a hat folgende sensorische Eigenschaften: Gaumen und Nase: runde Raucharomen nach Holz etwas Süße, etwas ätherisch. Alle Raucharoma ohne störende Aromakomponenten oder andere störende Nebenkomponenten. Trinkreife. Chemische Analysen zeigen zudem, dass der rauchige Whisky a zumindest viel höhere Werte an Guajacol aufweist, im Vergleich zu einem nicht geräucherten Whisky.
b) Der rauchige Whisky b unter Verwendung von Lignin b hat folgende sensorische Eigenschaften: Gaumen: würzige Raucharomen, etwas Nelke, Nase: deutliche Raucharomen nach Nelke, Zimt. Alle Raucharoma ohne störende Aromakomponenten oder andere störende Nebenkomponenten. Trinkreife. Chemische Analysen zeigen zudem, dass der rauchige Whisky b zumindest viel höhere Werte an Guajacol aufweist, im Vergleich zu einem nicht geräucherten Whisky.
c) Der rauchige Whisky c unter Verwendung von Lignin c hat folgende sensorische Eigenschaften: Gaumen und Nase: viele störende Aromen und Nebenkomponenten, stark medizinisch. Ungenießbar.
d) Der rauchige Whisky d unter Verwendung von Lignin d hat folgende sensorische Eigenschaften: Gaumen: einige störende Aromen, zu schwaches Raucharoma, etwas Süße, Nase: zu schwaches Raucharoma, störende Aromen, medizinisch. Ungenießbar.

### Beispiel 7: Auswahl verschiedener Mengen an einem isoliertem reinen Lignin X und dessen Verwendung (erste Destillat)

Unterschiedliche Mengen ( a, b, c, d, e ) eines bestimmten isolierten reinen Lignins X, das mindestens positiv in den Beispielen 2-3 und 5-6 abgeschnitten hat, wird mittels kontrollierter Pyrolyse zum Räuchern von ersten Destillaten für die Single Malt- oder Whiskyherstellung verwendet und nach dessen erfindungsgemäßen Eignung geprüft.
a) Das rauchige erste Destillat a ("Low Wine") unter Verwendung von Menge a eines Lignins X hat folgende sensorische Eigenschaften: Gaumen und Nase: runde rauchige Aromen nach Holz und Wald. Alle Raucharoma ohne störende Aromakomponenten oder andere störende Nebenkomponenten. Trinkreife. Chemische Analysen zeigen zudem, dass das rauchige erste Destillat a ("Low Wine") zumindest viel höhere Werte an Guajacol aufweist, im Vergleich zu einem nicht geräucherten ersten Destillat.
b). Das rauchige erste Destillat b ("Low Wine") unter Verwendung von Menge b eines Lignins X hat folgende sensorische Eigenschaften: Gaumen und Nase sehr dominante Raucharomen. Störende Aromakomponenten dominieren. Ungenießbar.
c). Das rauchige erste Destillat c ("Low Wine") unter Verwendung von Menge c eines Lignins X hat folgende sensorische Eigenschaften: Gaumen und Nase: nur sehr schwache Raucharomen.
d). Das rauchige erste Destillat d ("Low Wine") unter Verwendung von Menge d eines Lignins X hat folgende sensorische Eigenschaften: Gaumen: angenehm holzig, angenehme Süße, Nase: wenige störende Aromakomponenten. Chemische Analysen zeigen zudem, dass das rauchige erste Destillat d ("Low Wine") zumindest viel höhere Werte an Guajacol aufweist, im Vergleich zu einem nicht geräucherten ersten Destillat.
e) Das rauchige erste Destillat e ("Low Wine") unter Verwendung von Menge e eines Lignins X hat folgende sensorische Eigenschaften: Gaumen und Nase: runde rauchige Aromen nach Holz, Anis, Fenchel. Alle Raucharoma ohne störende Aromakomponenten oder andere störende Nebenkomponenten. Trinkreife. Chemische Analysen zeigen zudem, dass das rauchige erste Destillat e ("Low Wine") zumindest viel höhere Werte an Guajacol aufweist, im Vergleich zu einem nicht geräucherten ersten Destillat.

### Beispiel 8: Auswahl verschiedener Mengen an einem isoliertem reinen Lignin X und dessen Verwendung (Whisky)

Unterschiedliche Mengen ( a, b, c, d ) eines bestimmten isolierten reinen Lignins X, das mindestens positiv in den Beispielen 2-3 und 5-7 abgeschnitten hat, wird mittels kontrollierter Pyrolyse zum Räuchern von Whisky verwendet und nach dessen erfindungsgemäßen Eignung geprüft.
a) Der rauchige Whisky a unter Verwendung von Menge a eines Lignins X hat folgende sensorische Eigenschaften: Gaumen und Nase: nur sehr schwache Raucharomen.
b) Der rauchige Whisky b unter Verwendung von Menge b eines Lignins X hat folgende sensorische Eigenschaften: Gaumen und Nase: dominante rauchige Aromen nach Holz, etwas medizinisch. Wenige störende Aromakomponenten und störende Nebenkomponenten. Chemische Analysen zeigen zudem, dass der rauchige Whisky b zumindest viel höhere Werte an Guajacol aufweist, im Vergleich zu einem nicht geräucherten Whisky
c) Der rauchige Whisky c unter Verwendung von Menge c eines Lignins X hat folgende sensorische Eigenschaften: Gaumen und Nase: angenehme rauchige Aromen nach Holz, etwas ätherisch. Alle Raucharoma ohne störende Aromakomponenten oder andere störende Nebenkomponenten. Trinkreife. Chemische Analysen zeigen zudem, dass der rauchige Whisky c zumindest viel höhere Werte an Guajacol aufweist, im Vergleich zu einem nicht geräucherten Whisky.
d). Der rauchige Whisky d unter Verwendung von Menge d eines Lignins X hat folgende sensorische Eigenschaften: Gaumen: holzige würzige Raucharomen, leichte Süße, etwas Vanille, Nase: angenehme holzige, würzige Raucharomen, etwas Vanille. Trinkreife. Chemische Analysen zeigen zudem, dass der rauchige Whisky d zumindest viel höhere Werte an Guajacol aufweist, im Vergleich zu einem nicht geräucherten Whisky.

### Beispiel 9: Verwendung des erfindungsgemäßen Verfahrens zum Räuchern von Holzpartikel für die Herstellung von rauchigem Single Malt oder rauchigem Whisky.

Isolierte reine Lignine (a, b, c ) die mindestens positiv in den Beispielen 2-3 und 5-8 abgeschnitten haben, wurden nach dem erfindungsgemäßen Verfahren verwendet und anschließend zum erfindungsgemäßen Räuchern von Holzpartikel und zur darauffolgenden Herstellung eines Single Malts mit Holzpartikel eingesetzt (siehe auch EP3284812B1).
a) Der Single Malt a unter Verwendung eines Lignins a für das erfindungsgemäße Räuchern von Holzpartikel zur anschließenden Herstellung eines Whiskys hat folgende sensorische Eigenschaften: Gaumen und Nase: angenehme runde rauchige Aromen nach Holz und Wald. Alle Raucharomen ohne störende Aromakomponenten oder andere störende Nebenkomponenten. Trinkreife
b) Der Single Malt b unter Verwendung eines Lignins b für das erfindungsgemäße Räuchern von Holzpartikel zur anschließenden Herstellung eines Whiskys hat folgende sensorische Eigenschaften: Gaumen und Nase: angenehme Raucharomen nach Zimt, Nelke, etwas Holz, etwas süße. Alle Raucharomen ohne störende Aromakomponenten oder andere störende Nebenkomponenten. Trinkreife
c) Der Single Malt c unter Verwendung eines Lignins b für das erfindungsgemäße Räuchern von Holzpartikel zur anschließenden Herstellung eines Whiskys hat folgende sensorische Eigenschaften: Gaumen und Nase: deutliche Raucharomen, etwas ätherisch, leicht süß, leicht fruchtig. Alle Raucharomen ohne störende Aromakomponenten oder andere störende Nebenkomponenten. Trinkreife.

Chemische Analysen zeigen zudem, dass alle rauchigen Single Malts a, b und c, vorteilhaft jeweils hohe Werte an Raucharomen, wie Guajacol, 4-ethylphenol, 4-ethylguajacol und Eugenol, aufweisen, im Vergleich zu einem Single Malts ohne erfindungsgemäße, geräucherte Holzpartikel oder andere erfindungsgemäße, geräucherten Komponenten.

Die Erfindung wurde ausführlich unter Bezugnahme auf Ausführungsbeispiele beschrieben. Jedoch wird ein Fachmann verstehen, dass an diesen Ausführungsbeispielen Änderungen vorgenommen werden können, ohne von den Prinzipien und dem Geiste der Erfindung, deren Schutzumfang in den beigefügten Ansprüchen und ihren Äquivalenten definiert ist, abzuweichen.

## Patentansprüche

1. Verfahren zur Auswahl und zur kontrollierten Pyrolyse von Lignin und dessen Verwendung bei der Whiskyherstellung, umfassend wenigstens die folgenden Schritte:
a) Auswahl eines isolierten reinen Lignins nach dessen pflanzlichen Ursprung, wobei auch mehrere isolierte reine Lignine mit gleichem pflanzlichen Ursprung für die Auswahl kombiniert werden können; wobei die Auswahl so gewählt wird, dass bei der anschließenden Pyrolyse des Lignins ein Rauch entsteht, der sich für das erfindungsgemäße Räuchern von unterschiedlichen Komponenten bei der Single Malt - oder Whiskyherstellung eignet, insbesondere dadurch eignet, dass bei der Whiskyherstellung in einem ersten oder einem weiteren Destillat oder in einem trinkreifen Whisky oder Single Malt ein Raucharoma ohne störende Aromakomponenten oder andere störende Nebenkomponenten, zumindest sensorisch, wahrnehmbar ist;
b) weitere Auswahl des Lignins aus a) nach dessen chemisch-physikalischen Aufschluss- oder Vor- und Nachbehandlungsverfahren, wobei auch mehrere isolierte reine Lignine mit gleichem Aufschluss- oder Vor- und Nachbehandlungsverfahren für die Auswahl kombiniert werden können; wobei die Auswahl so gewählt wird, dass bei der anschließenden Pyrolyse des Lignins ein Rauch entsteht, der sich für das erfindungsgemäße Räuchern von unterschiedlichen Komponenten bei der Single Malt - oder Whiskyherstellung eignet, insbesondere dadurch eignet, dass bei der Whiskyherstellung in einem ersten oder einem weiteren Destillat oder in einem trinkreifen Whisky oder Single Malt ein Raucharoma ohne störenden Aromakomponenten oder anderen störenden Nebenkomponenten, zumindest sensorisch, wahrnehmbar ist;
c) Auswahl einer Menge des Lignins aus b) für die kontrollierte Pyrolyse, wobei die Auswahl der Menge so gewählt wird, dass bei der kontrollierten Pyrolyse des Lignins oder einer Lignin-Mischung eine Menge an Rauch mit Aromakomponenten entsteht, die sich für das erfindungsgemäße Räuchern von unterschiedlichen Komponenten bei der Single Malt- oder Whiskyherstellung eignet, insbesondere dadurch eignet, dass bei der Single Malt- oder Whiskyherstellung in einem ersten oder einem weiteren Destillat oder in einem trinkreifen Whisky oder einem trinkreifen Single Malt ein Raucharoma ohne störenden Aromakomponenten oder anderen störenden Nebenkomponenten, zumindest sensorisch, wahrnehmbar ist;
d) Kontrollierte Pyrolyse des Lignins aus c) in mindestens einer Vorrichtung zur Erzeugung von Rauch, wobei die Parameter bei der kontrollierten Pyrolyse zumindest folgende kontrollierbaren Parameter umfassen: die Ligninzusammensetzung, die Restfeuchtigkeit des Lignins, die Darreichungsform des Lignins, die Heizrate, die Reaktionstemperatur und damit die Pyrolysegeschwindigkeit, der Sauerstoffgehalt, die Feuchtigkeit bei der Pyrolyse insgesamt, der Druck, die Verweilzeit, die optionale Verwendung von Katalysatoren oder/und Bindemittel;wobei die kontrollierbaren Parameter bei der kontrollierten Pyrolyse so gewählt und kontrolliert werden, dass sich das Lignin oder die Lignin-Mischung aus c) kontrolliert thermisch zersetzt und verdampft und eine gewünschte Menge an Rauch mit flüchtigen Aromakomponenten entsteht, die sich für das Räuchern ganz unterschiedlicher Komponenten bei der Whiskyherstellung eignet, insbesondere dadurch eignet, dass bei der Whiskyherstellung in einem ersten oder einem weiteren Destillat oder in einem trinkreifen Single Malt oder trinkreifen Whisky ein Raucharoma ohne störende Aromakomponenten oder anderen störende Nebenkomponenten, zumindest sensorisch, wahrnehmbar ist;
e) Ausleitung des Rauches aus der mindestens einen Vorrichtung mittels mindestens einem Hilfsmittel;
f) Verwendung des Rauches mit seinen Aromabestandteilen zum Räuchern von mindestens einer der folgenden unterschiedlichen Komponenten bei der Whiskyherstellung: 1. Getreide oder/und 2. Malz oder/und 3. Holzpartikel oder/und 4. Maische vor dem Fermentieren oder/und 5. Whiskybier nach dem Fermentieren oder/und 6. einem ersten Destillat oder/und 7. einem zweiten oder weiteren Destillat oder/und 8. einem Single Malt oder/und 9. einem Whisky oder/und 10. mindestens einem Behältnis, sowie 11. fakultativ zusätzlich Wasser, als Hilfsmittel; wobei das mindestens eine Behältnis im Inneren, an der Kontaktfläche zum Inhalt, mindestens teilweise oder auch vorwiegend aus Holz sein sollte oder aber im Inneren oder im Ganzen ausschließlich aus Holz sein kann; wobei das mindestens eine Behältnis verschließbar sein sollte.

2. Verfahren nach Anspruch 1, wobei das Lignin oder die Lignin-Mischung auch ein hochreines Lignin aufweisen kann; wobei das Lignin mindestens eine der folgenden Darreichungsformen haben kann oder auch Mischungen daraus: ein vermahlenes Pulver, ein Granulat oder kompaktierte Formen, wie zum Beispiel, ein Pellet oder ein Brikett oder ähnliches; wobei das mindestens eine Behältnis ein Holzfass sein kann.

3. Verfahren nach wenigstens einem der vorherigen Ansprüche 1-2, wobei der Restfeuchtigkeitsgehalt des Lignins oder der Lignin-Mischung einen Wert von ca. 6% bis ca. 40% betragen soll, bevorzugt von ca. 8% bis ca. 16%.

4. Verfahren nach wenigstens einem der vorherigen Ansprüche 1 -3, wobei das Lignin oder die Lignin-Mischung für die kontrollierte Pyrolyse optional vorbehandelt werden kann, zum Beispiel, mit einem Tonmineral, um die Pyrolyse zu optimieren, insbesondere für eine kontinuierliche Pyrolyse.

5. Verfahren nach wenigstens einem der vorherigen Ansprüche 1-4, wobei die kontrollierte Pyrolyse bevorzugt mit mindestens einem Ofen oder/und mit mindestens einer Flamme erfolgen kann.

6. Verfahren nach wenigstens einem der vorherigen Ansprüche 1-5, wobei die kontrollierbaren Parameter bei der kontrollierten Pyrolyse zudem so gewählt und kontrolliert werden, dass keine erhöhten Werte an gesundheitsschädlichen Substanzen im Rauch entstehen, die anschließend zumindest in einem ersten oder/und in einem weiteren Destillat oder/und in einem trinkreifen Single Malt oder Whisky, messbar wären.

7. Verfahren nach wenigstens einem der vorherigen Ansprüche 1-6, wobei die kontrollierbaren Parameter der Pyrolyse so kontrolliert und variable eingestellt werden können, so dass gewünschte Zersetzungsprodukte und Aromaspektren aus dem Lignin gezielt gebildet werden können, für das anschließende Räuchern von unterschiedlichen Komponenten bei die Single Malt- oder/und Whiskyherstellung.

8. Verfahren nach wenigstens einem der vorherigen Ansprüche 1-7, wobei die kontrollierbaren Parameter der Pyrolyse so kontrolliert und variable eingestellt werden können, so dass sich der Rauch in seiner Zusammensetzung unterscheiden kann und für unterschiedliche Verwendungen vorgesehen sein kann, wie zum Räuchern von entweder 1) vorwiegend festen Komponenten (wie z.B. Getreide, Malz, Holzpartikel, mindestens ein Behältnis) oder von 2) vorwiegend wässrigen Komponenten (wie z.B. Maische, Whiskybier, erstes Destillat) oder von 3) vorwiegend alkoholischen Komponenten (wie z.B. zweites und weiteres Destillat, Single Malt, Whisky) oder auch Kombinationen davon bei die Single Malt- oder Whiskyherstellung.

9. Verfahren nach wenigstens einem der vorherigen Ansprüche 1-8, wobei die kontrollierbaren Parameter der Pyrolyse so kontrolliert und variable eingestellt werden können, so dass ein einmaliges Räuchern einer der unterschiedlichen Komponenten bei die Single Malt- oder/und Whiskyherstellung ausreichen kann, damit in einem ersten oder einem weiteren Destillat oder in einem trinkreifen Whisky oder trinkreifen Single Malt ein Raucharoma ohne störenden Aromakomponenten oder anderen störenden Nebenkomponenten, zumindest sensorisch, wahrnehmbar sind.

10. Verfahren nach wenigstens einem der vorherigen Ansprüche 1-9, wobei die kontrollierte Pyrolyse kontinuierlich oder diskontinuierlich erfolgen kann.

11. Verfahren nach wenigstens einem der vorherigen Ansprüche 1-10, wobei die kontrollierte Pyrolyse unterschiedlich erfolgen kann: mit oder ohne Sauerstoff; optional kann die Pyrolyse auch im Vakuum erfolgen.

12. Verfahren nach wenigstens einem der vorherigen Ansprüche 1-11, wobei für die kontrollierte Pyrolyse auch Katalysatoren verwendet werden können, wie zum Beispiele Zeolithe oder auch andere Katalysatoren; wobei für die Pyrolyse auch Bindemittel verwendet werden können, wie, zum Beispiel, Tonmineralien oder auch andere Bindemittel.

13. Verfahren nach wenigstens einem der vorherigen Ansprüche 1-12, wobei der Rauch, der bei der kontrollierten Pyrolyse entsteht und zum Räuchern verwendet wird, bevorzug schwefelfrei sein soll.

14. Verfahren nach wenigstens einem der vorherigen Ansprüche 1-13 wobei das Hilfsmittel bevorzugt ein Gebläse mit erhitzter oder nicht erhitzter Luft oder einem inerten Gas oder ähnliches sein kann, um die zahlreichen flüchtigen Zersetzungsprodukte des Lignins im Rauch in einer messbaren und ausreichend hohen Konzentration kontrolliert auszuleiten.

15. Verfahren nach wenigstens einem der vorherigen Ansprüche 1-14, wobei mit dem Verfahren ein trinkreifer rauchiger Whisky oder ein trinkreifer rauchiger Single Malt ganz ohne die Verwendung von Torf hergestellt werden kann.
